# EUROPÄISCHE PATENTSCHRIFT

(11) **EP 0 758 458 B1**
(45) Veröffentlichungstag und Bekanntmachung des Hinweises auf die Patenterteilung: **04.02.1998**
(21) Anmeldenummer: 95922483.3
(22) Anmeldetag: 24.05.1995
(51) Int. Cl.: G02B 6/42, G02B 6/38, G02B 6/36, G02B 6/44

(54) **KUPPLUNGSVORRICHTUNG FÜR LICHTWELLENLEITER**
OPTICAL WAVEGUIDE COUPLING DEVICE
DISPOSITIF DE COUPLAGE DE FIBRES OPTIQUES

(30) Priorität: 25.05.1994 DE 4418136
(43) Veröffentlichungstag der Anmeldung: 19.02.1997
(73) Patentinhaber: WOLTER, Klaus, D-40625 Düsseldorf (DE); HENKE, Dieter, D-40625 Düsseldorf (DE)
(72) Erfinder: WOLTER, Klaus, D-40625 Düsseldorf (DE); HENKE, Dieter, D-40625 Düsseldorf (DE)
(74) Vertreter: Cohausz & Florack
(86) Internationale Anmeldenummer: EP9501995
(87) Internationale Veröffentlichungsnummer: WO9532445

(56) Entgegenhaltungen:
- EP-A- 0 015 309
- EP-A- 0 147 231
- EP-A- 0 335 367
- EP-A- 0 392 679
- EP-A- 0 520 946
- FR-A- 2 097 419
- FR-A- 2 534 700
- GB-A- 1 488 409
- US-A- 4 225 214
- US-A- 4 533 209
- US-A- 5 104 242
- US-A- 5 245 688

## Beschreibung

Die Erfindung betrifft eine Kupplungsvorrichtung für mehradrige Lichtwellenleiter.

Eine Kupplungsvorrichtung der eingangs genannten Art ist aus der FR 2097419 bekannt.

Aus der EP 0 147 231 ist ein mehradriger Lichtwellenleiter offenbart, der bereits vor dem Einlegen in die Kupplungsvorrichtung aufgeteilt ist.

Das aus der GB-A 1 488 409 bekannte Kupplungselement hat keine Spleißfunktion. Vielmehr werden die einzelnen Lichtwellenadern entsprechend der zu überbrückenden Länge um ein Vielfaches des Umfanges des Zylinders umschlungen und anschließend in die Wandlerbereiche eingeführt. Das bekannte Element dient zur Kompensation eventuell vorhandener Längenreserve in Lichtwellen-leitern.

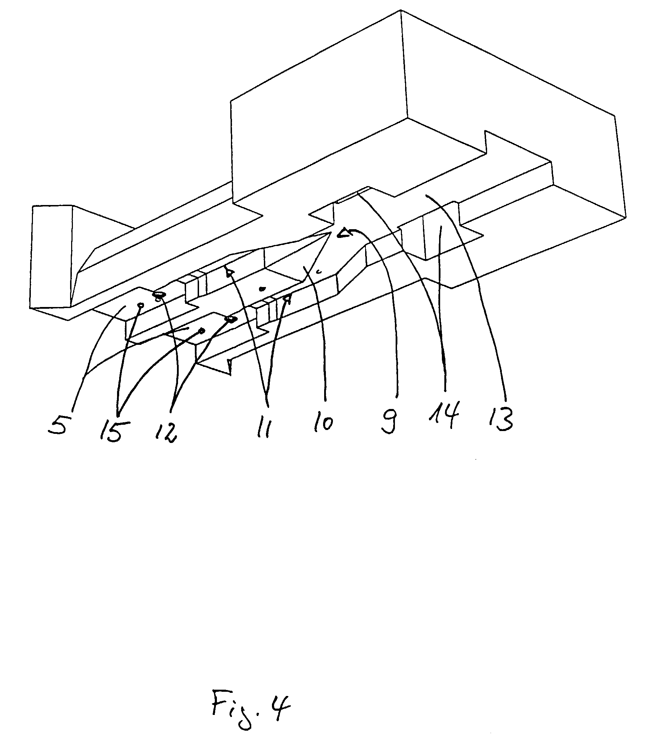

Das aus der EP 0 392 679 bekannte Kupplungselement für mehradrige Lichtwellenleiter weist eine Vielzahl von Einführungsöffnungen (Fig. 4B) auf, in die die sich-aus dem mehradrigen Lichtwellenleiter verzweigenden Adern eingeschoben werden. Das in Fig. 4A dargestellte Element hat keine Spleißfunktion sondern dient als Schutzelement (Protektor).

Aus der Praxis ist eine allgemeine Kupplungsvorrichtung zur Verbindung von optoelektrischen Bauteilen mit einzelnen Lichtwellenleitern bekannt. Diese Kupplungsvorrichtung besteht im wesentlichen aus einem Bodenteil und einem darauf befestigbaren Deckelteil. Sowohl Boden- als auch Deckelteil weisen Ausnehmungen auf, die in zusammengesetztem Zustand Führungen für ein Lichtwellenleiterende sowie die Aufnahmen für zwei optoelektrische Bauteile bilden. Das Ende eines Lichtwellenleiters wird mit einer solchen Kupplungsvorrichtung versehen, indem das Lichtwellenleiterende mit seinen einzelnen Adern in die dafür vorgesehenen Führungen des Bodenteils eingelegt wird. Daraufhin wird das Deckelteil aufgesetzt und verschraubt, so daß der Lichtwellenleiter zwischen Bodenteil und Deckelteil festgeklemmt ist.

Nachteilig ist, daß die Montage einer solchen Kupplungsvorrichtung an ein Lichtwellenleiterende umständlich ist, da mehrere Einzelelemente zunächst zueinander positioniert und dann miteinander verbunden werden müssen. Hierzu wird außerdem ein Werkzeug, beispielsweise ein Schraubendreher zum Verschrauben von Bodenteil mit Deckelteil, benötigt. Ein weiterer Nachteil besteht darin, daß diese Vorrichtung keinerlei Maßnahmen zum Abschatten der Kabelführung weder für den Fall eines Nichtbestücktseins mit einem Lichtwellenleiter, noch für den Fall eines Öffnens des Gehäuses vorsieht. Aufgrund möglicher Probleme durch Fremdlichteinfall oder dem Einfangen elektromagnetischer Wellen kann daher der mit optoelektrischen Bauelementen gekoppelte Lichtwellenleiter in einer Betriebsphase nicht ausgetauscht werden.

Davon ausgehend liegt der Erfindung die Aufgabe zugrunde, eine Kupplungsvorrichtung für mehradrige Lichtwellenleiter derart auszugestalten und zu verbessern, daß sie einfach und schnell handhabbar ist. Eine weitere Aufgabe der Erfindung liegt darin, daß unter Berücksichtigung der elektromagnetischen Verträglichkeit und der Fremdlichtabschattung eine unter Betriebsbedingungen wie auch generell mehrfach lösbare Steckverbindung ermöglicht wird, eine Zugentlastung für die Lichtwellenleiter vorgesehen ist und eine exakte Positionierung der optischen Komponenten möglich ist.

Gelöst werden diese Aufgaben mit einer Kupplungsvorrichtung für Lichtwellenleiter, wie sie im Anspruch 1 dargestellt ist.

Ein besonderer Vorteil dieser Kupplungsvorrichtung liegt darin, daß sie mit dem Ende eines Lichtwellenleiters verbunden werden kann, ohne daß dabei verschiedene Bauteile der Kupplungsvorrichtung zueinander positioniert und miteinander verbunden werden müssen. Auch wird hierfür kein Werkzeug benötigt. Zum Verbinden wird lediglich das Ende des Lichtwellenleiters direkt in die Kupplungsvorrichtung eingeschoben. Sobald der Lichtwellenleiter in die Einführungsöffnung eingeführt worden ist, wird er von dem Klemmelement gegen Herausziehen gesichert. Auf diese Weise wird die für den Anschluß eines Lichtwellenleiters an die Kupplungsvorrichtung benötigte Zeit wesentlich verkürzt.

Die Anschlußmittel können beispielsweise für Lichtwellenleiterenden oder aber für in Steckern sitzende oder als Stecker ausgebildete elektrooptische Elemente vorgesehen sein. Es ist aber auch möglich, die Anschlußmittel in der Art der Lichtwellenleiteraufnahme auszugestalten. Somit wird eine schnelle, einfache und sichere Ankupplung von Lichtwellenleitern ermöglicht.

Gemäß der Erfindung verzweigt sich die Kabelführung über mindestens ein Spleißelement zu Führungen zu den Anschlußmitteln hin, wobei jeder Führung mindestens eine Spleißfläche des Spleißelements zugeordnet ist. Bei -Einführen durch die Einführungsöffnung wird ein mehradriger Lichtwellenleiter durch die Kabelführung auf das Spleißelement geführt. Dabei wird er von dem Spleißelement derart gespleißt, daß die einzelnen Adern bzw. Gruppen von Adern als Spleißenden zu den dafür vorgesehenen Anschlußmitteln hindurchgeführt werden, bis sie das anschlußmittelseitige Ende der Führungen erreicht haben. Auf diese Weise entfällt bei der Montage ein manuelles Zerteilen eines mehradrigen Lichtwellenleiters in einzelne oder Gruppen von Adern. Als ebenso vorteilhaft erweist sich, daß die Verzweigung der Kabelführung über das Spleißelement zu den Führungen eine Lichtfalle bildet derart, daß bei Fehlen eines Lichtwellenleiters die in den Anschlußmitteln sitzenden optischen Anschlüsse vor direktem Lichteinfall geschützt sind.

In einer weiteren bevorzugten Ausführungsform weist jedes Spleißelement auf seiner dem Lichtwellenleiter zugewandten Seite mindestens eine in Längsrichtung des Lichtwellenleiters liegende, erhabene Schneidkante auf. Alternativ oder ergänzend besteht das Spleißelement aus mindestens einem sich in Richtung der Einführungsöffnung pyramidenförmig verjüngenden Keil. Mit diesen Ausgestaltungen kann ein mehradriger Lichtwellenleiter nach Bedarf entsprechend der benötigten Anschlußart unterteilt werden. Dabei eignen sich diese Ausgestaltungen besonders gut für zweiadrige Lichtwellenleiter. Wird der Lichtwellenleiter durch die Einführungsöffnung in die Kupplungsvorrichtung eingeführt, gleitet er auf die Keile auf, so daß im Zusammenspiel der Keile Reißkräfte auf den Lichtwellenleiter senkrecht zu seiner Kabelachse wirken, so daß die beiden Adern ohne großen Widerstand beim Einführen getrennt werden.

Das Klemmelement läßt sich konstruktiv einfach als Blattfeder ausgestalten, die an ihrer dem Lichtwellenleiter zugewandten Seite in Einführrichtung geneigte Rippen aufweist. Außerdem kann es bevorzugt so gestaltet sein, daß es die Kabelführung gegen das Eindringen von elektromagnetischer Strahlung abschirmt, wenn kein Lichtwellenleiter in die Kupplungsvorrichtung eingeführt ist. Auf diese Weise ist in jedem Fall eine wirksame Fremdlichtabschattung und eine Abschirmung gegen elektromagnetische Einstrahlung mit einem einzigen konstruktiven Element gewährleistet. Dies ist unter anderem dann von Vorteil, wenn die Kupplungsvorrichtung als Anschlußdose eingesetzt wird und Lichtwellenleiter häufig an- und wieder abgekoppelt werden.

In vorteilhafter Ausgestaltung weist das Klemmelement manuell betätigbare Mittel zum Lösen des Klemmelements entgegen der Klemmkraft auf. So kann der Lichtwellenleiter jederzeit wieder aus der Kupplungsvorrichtung gelöst werden, ohne daß er oder die Kupplungsvorrichtung dabei beschädigt werden. Weitere Vorteile liegen darin, daß das Gehäuse zum Austausch eines Lichtwellenleiters beispielsweise zu Reparaturzwecken nicht geöffnet werden muß. Somit kann ein Wechsel des Lichtwellenleiters auch in einer Betriebsphase vollzogen werden, ohne daß es dabei zu Problemen wegen Lichteinfalls oder wegen elektromagnetischer Strahlung kommt. Auch ist die Kupplungsvorrichtung vielfach einsetzbar und muß nicht zusammen mit einem defekten Kabel entsorgt werden.

Mit einem Verjüngen der Führungen bzw. der Kabelführung an ihrem anschlußmittelseitigen Ende lassen sich die Spleißenden auf einfache Weise beim Einführen des Lichtwellenleiters in die Kupplungsvorrichtung in eine genau definierte Position zum Anschlußelement bringen.

Des weiteren können die Anschlußmittel federnd gelagerte Rast- und/oder Justiernoppen aufweisen. So können auch Anschlußelemente, beispielsweise ein Stecker mit entsprechenden Ausnehmungen, gegenüber einem Spleißende in eine genau definierte Lage gebracht werden, ohne das weitere Justierarbeiten notwendig werden. Durch die federnde Lagerung der Rastnoppen ist außerdem gewährleistet, daß der Stecker einerseits fest in dem Anschlußmittel sitzt, andererseits aus dem Anschlußmittel auf einfache Weise lösbar ist.

Vorzugsweise sollte die Kupplungsvorrichtung elastische Elemente aufweisen, die auf die miteinander zu kuppelnden Elemente in gekuppeltem Zustand eine derartige Druckkraft ausüben, daß diese aufeinander zu bewegt werden. Auf diese Weise kann verhindert werden, daß beispielsweise durch eine Verschiebung des Lichtwellenleiterkabels in seiner Ummantelung der Kontakt zwischen dem Lichtwellenleiterkabel und dem Anschluß verloren geht.

Auch können die Wandflächen zwischen den Führungen bzw. der Kabelführung und dem Anschlußmittel bzw. den Anschlußmitteln verspiegelt sein. Dadurch kann im Fall einer Fehlbedienung (zum Beispiel bei Einstecken des Lichtwellenleiters nicht bis zum Anschlag) trotzdem soviel Licht wie möglich auf die in den Anschlußmitteln sitzenden optischen oder elektrooptischen Elemente geleitet werden.

Die erfindungsgemäße Kupplungsvorrichtung kann an der Außenseite ihres Gehäuses eine Schulter zum Abstützen gegen ein Widerlager aufweisen. Diese Schulter dient zum Abstützen des Gehäuses bei Zugbeanspruchung des Lichtwellenleiters gegen ein Widerlager. Auf diese Weise werden die Zugkräfte von dem Gehäuse durch Klemmelement und Schulter aufgenommen, ohne daß die in den Anschlußmitteln sitzenden Elemente - beispielsweise Stecker - durch den Zug belastet werden.

Die Schulter wird vorteilhafterweise mit einer Sollbruchstelle ausgeführt, so daß das Gehäuse bei zu hoher Zugbeanspruchung an einer genau definierten Stelle bricht.

Darüber hinaus kann das Gehäuse von innen und/oder außen derart mit einer elektrisch leitenden Beschichtung versehen sein, daß es gegen das Eindringen von elektromagnetischer Strahlung abgeschirmt ist. Auch kann die Klemmvorrichtung elektrisch leitfähig derart ausgestaltet sein, daß bei Fehlen des Lichtwellenleiters die Einführungsöffnung mit einer sehr hohen Schirmdämpfung gegen elektromagnetische Wellen versehen ist. Dies kann beispielsweise auch dadurch erreicht werden, daß die Länge der Kabelführung und deren Lichte Weite derart aufeinander abgestimmt sind, daß ein Eindringen von elektromagnetischer Strahlung in die Anschlußmittel verhindert ist.

Die gleiche abschirmende Wirkung gegen störende elektromagnetische Einstrahlung wird dadurch erreicht,daß die Kupplungsvorrichtung vollständig aus elektrisch leitendem Material besteht.

Im folgenden wird die Erfindung anhand eines bevorzugten Ausführungsbeispiels beschrieben. Dabei zeigen im einzelnen
- Fig. 1: eine isometrische Darstellung der Kupplungsvorrichtung von oben,
- Fig. 2: eine isometrische Darstellung des Deckels der Kupplungsvorrichtung von oben,
- Fig. 3: eine Isometrie des Bodens der Kupplungsvorrichtung von oben und
- Fig. 4: eine isometrische Darstellung des Deckels der Kupplungsvorrichtung von unten.

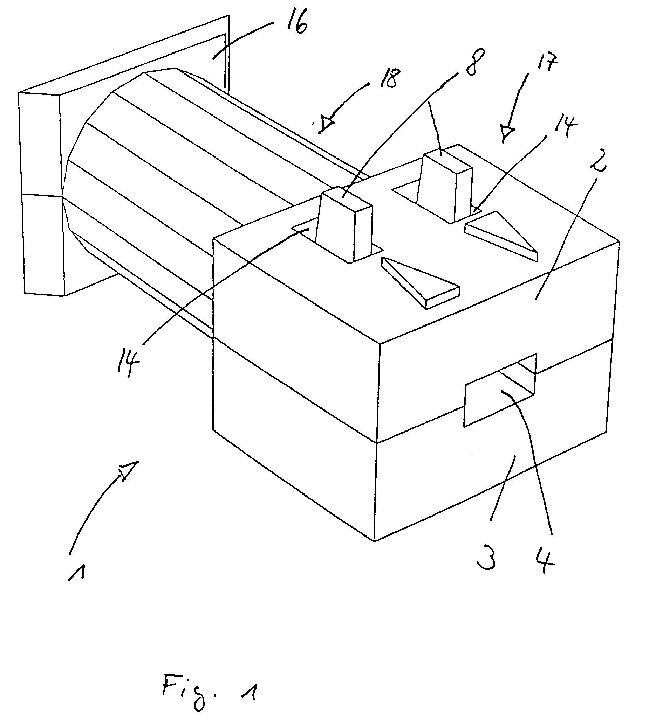

Die bevorzugte Ausführungsform der Kupplungsvorrichtung besteht aus einem zweiteiligen Gehäuse **1** mit einem Deckel **2** und einem Boden **3**. Die Kupplungsvorrichtung weist an ihrer Vorderseite eine Einführungsöffnung **4** auf, die durch Ausnehmungen an Deckel **2** und Boden **3** gebildet wird (Fig. 1).

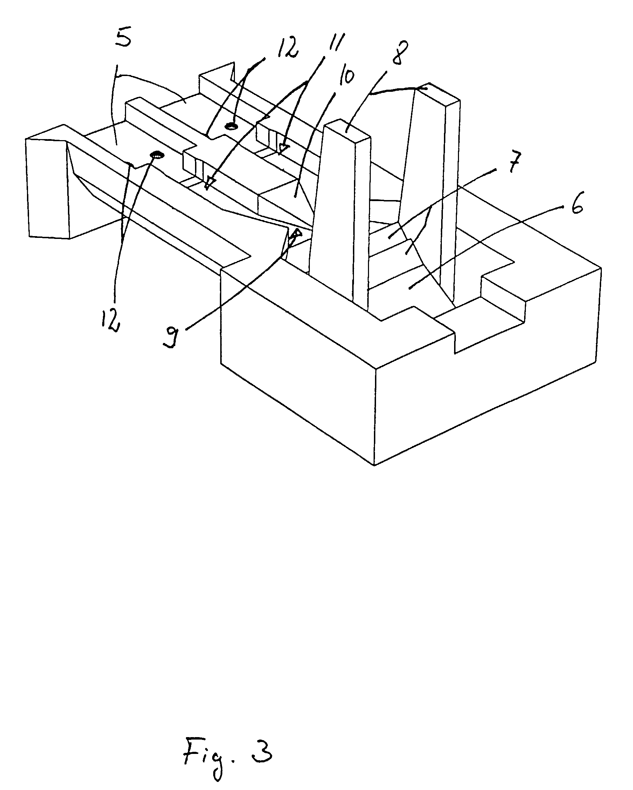

Deckel **2** (Fig.4) und Boden **3** (Fig. 3) weisen hinter den Ausnehmungen für die Einführungsöffnung **4** kanalartige Ausnehmungen auf, die im wesentlichen der Kabelführung des Lichtwellenleiters von der Einführungsöffnung **4** zu den Anschlußmitteln **5** dienen. Die Länge der kanalartigen Ausnehmungen ist dabei derart auf deren lichte Weite abgestimmt, daß eine optimale Abschirmung gegen elektromagnetische Einstrahlung erreicht wird. Der Boden weist in dem Bereich dieser Ausnehmungen hinter der Einführungsöffnung **4** eine im wesentlichen in Richtung des Deckels wirkende Blattfeder **6** auf, an deren oberer Seite quer zur Kanalfuhrungsachse liegende, in Einführungsrichtung geneigte Rippen **7** ausgebildet sind. Sie weist seitlich zwei in Bewegungsrichtung zur Blattfeder **6** auskragende Stifte **8** auf, mit Hilfe derer die Blattfeder **6** entgegen der Federkraft bewegt werden kann.

Fluchtend zu Blattfeder **6** und Einführungsöffnung **4** schließt sich an die Blattfeder **6** eine Einfädelöffnung **9** und nachfolgend ein Spleißelement **10** an. Das Spleißelement **10** ist als sich pyramidenförmig in Richtung der Einführungsöffnung **4** verjüngender Keil ausgebildet. Die sich an das Spleißelement **10** anschließenden Führungen **11** enden in den Anschlußmitteln **5**. An ihrem anschlußmittelseitigen Ende verjüngen sich die Führungen **11**, so daß automatisch eine genaue Positionierung der Spleißenden zu den Anschlußmitteln **5** beim Einfügen eines mehradrigen Lichtwellenleiters erfolgt.

Durch die Verzweigung der Kabelführung wird verhindert, daß Licht auf direktem Weg durch die Kupplungsvorrichtung dringt. Auf diese Weise sind beim Fehlen eines Lichtwellenleiters die in den Anschlußmitteln **5** sitzenden optischen und /oder elektromagnetischen Anschlüsse vor direktem Lichteinfall geschützt. Ebenso bewirkt diese Lichtfalle, daß Licht, welches ggf. von in den Anschlußmitteln angeordneten lichtemittierenden Elementen ausgesendet wird, auf direktem Wege in die Umgebung gelangt.

Die Anschlußmittel **5** werden durch im wesentlichen rechtwinklige Ausnehmungen gebildet. Sie weisen im Boden **3** federnd gelagerte Rastnoppen **12** auf, die zum Festhalten eines Steckers und seiner genauen Positionierung zu den Spleißenden dienen.

Die Gestaltung des Deckels **2** ist in Bezug auf Einführungsöffnung **4**, Einfädelöffnung **9**, Spleißelement **10**, Führungen **11**, Anschlußmittel **5** und Rastnoppen **12** identisch zu der des Bodens **3** (Fig. 4). Der Deckel **2** weist lediglich an Stelle der Blattfeder **6** eine ebene Fläche **13** als Widerlager für die Blattfeder **6** sowie Öffnungen **14** für die Stifte **8** auf, durch die von außen auf die Blattfeder **6** eingewirkt werden kann. Des weiteren sind auf der Deckelseite der Anschlußmittel **5** neben den Rastnoppen **12** Justiernoppen **15** vorgesehen, die ebenso wie die Rastnoppen **12** zur genauen Positionierung des Steckers eingesetzt werden.

Das Gehäuse **1** weist eine Schulter **16** und einen aufnahmeseitigen Gehäusekopf **17** auf, die mit ihren Außenabmessungen über den Umfang eines zylindrischen Mittelteils **18** hinausragen. So kann das Gehäuse **1** in die Wände von Apparaturen eingesetzt werden, wobei Gehäusekopf **17** und Schulter **16** beidseitig der Apparatewand abgestützt werden können.

Zur Kupplung mit einem Lichtwellenleiter können beispielsweise als Stecker ausgebildete optoelektronische Bauelemente ohne weiteren Aufwand einfach in die Anschlußmittel **5** eingeführt werden. Aufgrund des Zusammenspiels von Rast- und Justiernoppen **12,15** und an den Steckern dafür vorzusehenden Ausnehmungen werden die Stecker exakt in den Anschlußmitteln **5** positioniert. Zur Bestückung der Kupplungsvorrichtung mit dem mehradrigen Lichtwellenleiter ist lediglich dafür zu sorgen, daß das optische Ende des Lichtwellenleiters funktionsfähig ist. Dann kann der Lichtwellenleiter in die Einführungsöffnung **4** eingeführt werden. Beim Einführen drückt der Lichtwellenleiter die Blattfeder **6** zur Seite. Dabei spannt sich die Blattfeder **6** und drückt den Lichtwellenleiter gegen die ebene Fläche **13** des Deckels **2**. Wird nun entgegen der Einführrichtung eine Zugspannung auf den Lichtwellenleiter aufgebracht, so wird die Blattfeder **6** aufgrund der Haftreibung zwischen den Rippen **7** und dem Lichtwellenleiter noch weiter gespannt, so daß der Lichtwellenleiter entsprechend stärker gegen die ebene Fläche **13** angedrückt wird. Daher kann sich der Lichtwellenleiter aufgrund einer anliegenden Zugspannung nur geringfügig entgegen der Einführrichtung bewegen. Soll der Lichtwellenleiter wieder aus der Kupplungsvorrichtung gelöst werden, muß die Blattfeder **6** über die Stifte **8** niedergehalten werden, so daß keine Federkräfte mehr auf den Lichtwellenleiter wirken können. In diesem Fall läßt sich der Lichtwellenleiter ohne weiteres aus der Kupplungsvorrichtung lösen.

Beim Einführen des mehradrigen Lichtwellenleiters wird sein Ende auf das Spleißelement **10** aufgeschoben. Aufgrund der Ausgestaltung des Spleißelements **10** wirken bei zunehmendem Vorschub Reißkräfte auf den bzw. die Stege zwischen den Adern senkrecht zur Kabelachse, so daß der Lichtwellenleiter in einzelne Adern bzw. Gruppen von Adern als Spleißenden ohne zu großen Widerstand beim Einstecken aufgeteilt wird. Des weiteren übernimmt das Spleißelement 10 die Aufgabe, die Spleißenden in die Führungen **11** zu den Anschlußmitteln **5** zu führen.

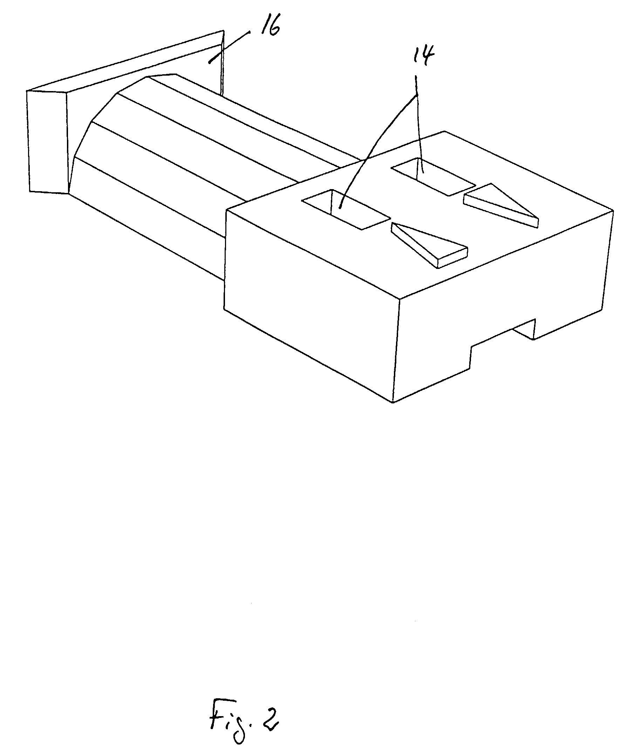

Wie voranstehend erläutert, besteht diese beschriebene bevorzugte Ausführungsform für insbesondere zweiadrige Lichtwellenleiter aus den Funktionselementen Boden (Fig. 3) und als Widerlager dazu dienendem Deckel (Fig. 2). Sie ist gekennzeichnet durch zwei Funktionsblöcke:
- dem Handhabungsblock mit Einführungsöffnung und Klemmelement für den mehradrigen Lichtwellenleiter und
- dem Führungshals mit Spleißelement, Kabelführung, Halter für beispielsweise die elektrooptischen Bauteile und Formteil für den Formschluß zum Elektronikträger, der als Durchführung in standardmäßige Gerätehauben dient.

Die wesentlichen konstruktiven Teile dieses Ausführungsbeispiels sind, aufgelistet von der Einführungsöffnung für das optische Kabel bis zum Formteil für den Formschluß zum Elektronikträger:
- die Einführungsöffnung für den Lichtwellenleiter;
- die Feder; sie zeichnet sich dadurch aus, daß sie in Einsteckrichtung durch das Kabel leicht beiseite zu drücken ist; dabei spannt sie sich und drückt das Kabel gegen das Widerlager, den Deckel (Normalzustand); wird nun entgegen der Einsteckrichtung des Kabels an diesem eine Zugspannung aufgebracht, so spannt sich die Feder durch Haftreibung am Lichtwellenleiter noch mehr und klemmt den Lichtwellenleiter noch stärker gegen das Widerlager; der Lichtwellenleiter bewegt sich dadurch nur wenig aus seiner Normallage; löst man diese Zugspannung, so kehrt die Feder mit dem Lichtwellenleiter wieder in Ihren Normalzustand zurück, entfernt werden kann der Lichtwellenleiter durch Wegdrücken der Feder; dazu ist an dieser ein Wegdrücker befestigt, der über seinen Durchgriff durch den Deckel leicht zu bedienen ist;
- die Kabelführung mit Einfädelöffnung, Spleißelement und anschließenden Führungen für die Einzeladern, sowie Verjüngung der Führungen zur Feinpositionierung; das Spleißelement ist für Stegleitungen ausgelegt und hat zwei Funktionen; die eine ist die Positionierung bzw. Führung der Stegleitung, die andere das voneinander Lösen der Einzeladern der Stegleitung; die vorliegende Konstruktion zeichnet sich dadurch aus, daß durch das Aufgleiten der Stegleitung auf den Keil im Zusammenspiel mit dem Widerlager im Deckel Reißkräfte auf den Steg zwischen den Adern senkrecht zur Kabelachse ausgeübt werden, so daß die beiden Adern ohne zu großen Widerstand beim Einstecken getrennt werden;
- die Führung und Halterung für die elektrooptischen Bauteile mit Rast-/Justiernoppen;
- Trapezförmige Nase für den Formschluß zu einem Elektronikträger; durch dieses Formschlußelement gelangt ein am Lichtwellenleiter anliegender Zug direkt auf den Elektronikträger, ohne dabei die Kontaktstellen der elektrooptischen Bauteile mit dem Träger zu belasten; die trapezförmige Nase ist so ausgelegt, daß eine zu große Zugbelastung zum Sicherheitsbruch führt.

## Patentansprüche

1. Kupplungsvorrichtung für Lichtwellenleiterkabel mit mehreren jeweils durch Stege verbundenen Lichtwellenleiteradern mit einem Gehäuse (1), das an einer Seite eine Einführungsöffnung (4) für einen Lichtwellenleiter und an einer anderen Seite Anschlußmittel (5) aufweist, wobei die Einführungsöffnung (4) mit den Anschlußmitteln (5) über eine Kabelführung im Innern des Gehäuses (1) verbunden ist, und wobei die Kabelführung in einem einführöffnungsseitigen Bereich ein nachgiebig gelagertes Klemmelement zum Halten des Lichtwellenleiters aufweist, das die Bewegung des Lichtwellenleiters in Richtung des Gehäuses (1) freigibt und in entgegengesetzter Richtung sperrt, **dadurch gekennzeichnet,** daß sich die Kabelführung über mindestens ein Trennelement zum Auftrennen (10) zu Führungen (11) für die Lichtwellenleitadern verzweigt, wobei die Führungen (11) zu den jeweiligen Anschlußmitteln (5) führen, wobei jeder Führung (11) mindestens eine Trennfläche des Trennelements (10) zugeordnet ist derart, daß beim Vorschub des Lichtwellenleiterkabels Reißkräfte auf zwischen den Lichtwellenleiteradern ausgebildete Stege wirken und das Lichtwellenleiterkabel in einzelne Adern bzw. Gruppen von Adern getrennt wird, die in die Führungen (11) geleitet werden.

2. Kupplungsvorrichtung nach Anspruch 1, wobei jedes Trennelement (10) auf seiner dem Lichtwellenleiter zugewandten Seite mindestens eine in Längsrichtung des Lichtwellenleiters liegende, erhabene Schneidkante aufweist.

3. Kupplungsvorrichtung nach Anspruch 2, wobei jedes Trennelement (10) aus mindestens einem sich in Richtung der Einführungsöffnung (4) pyramidenförmig verjüngenden Keil besteht.

4. Kupplungsvorrichtung nach einem der Ansprüche 1 bis 3, wobei das Klemmelement eine Blattfeder (6) ist und an seiner dem Lichtwellenleiter zugewandten Seite in Einführungsrichtung geneigte Rippen (7) aufweist.

5. Kupplungsvorrichtung nach einem der Ansprüche 1 bis 4, wobei das Klemmelement so ausgebildet ist, daß es die Kabelführung vollständig abschattet, wenn kein Lichtwellenleiter in die Kupplungsvorrichtung eingeführt ist.

6. Kupplungsvorrichtung nach Anspruch 1 bis 5, wobei das Klemmelement manuell betätigbare Mittel zum Lösen des Klemmelements entgegen der Klemmkraft aufweist.

7. Kupplungsvorrichtung nach einem der Ansprüche 1 bis 6, wobei die Anschlußmittel (5) federnd gelagerte Rastnoppen (12) und/oder Justiernoppen (15) aufweisen.

8. Kupplungsvorrichtung nach einem der Ansprüche 1 bis 7, wobei elastische Elemente vorgesehen sind, die auf die miteinander zu kuppelnden Elemente in gekuppeltem Zustand eine derartige Druckkraft ausüben, daß diese aufeinander zu bewegt werden.

9. Kupplungsvorrichtung nach einem der Ansprüche 1 bis 8, wobei das Klemmelement so ausgebildet ist, daß es die Kabelführung gegen das Eindringen von elektromagnetischer Strahlung abschirmt, wenn kein Lichtwellenleiter in die Kupplungsvorrichtung eingeführt ist.

10. Kupplungsvorrichtung nach einem der Ansprüche 1 bis 9, wobei die Kupplungsvorrichtung vollständig aus elektrisch leitendem Material besteht.

11. Kupplungsvorrichtung nach einem der voranstehenden Ansprüche, wobei die Länge der Kabelführung und deren lichte Weite derart aufeinander abgestimmt sind, daß ein Eindringen von elektromagnetischer Strahlung in die Anschlußmittel (5) verhindert ist.

## Claims

1. An optical waveguide coupling device with several optical waveguide conductors, connected by ridges, with a housing (1), comprising on one side an insertion aperture (4) for an optical waveguide and on another side connecting means (5), whereby the insertion aperture (4) is connected to the connecting means (5) by way of a cable guide in the interior of the housing (1) and whereby the cable guide, in the vicinity of the insertion aperture, has a resiliently mounted clamping element for holding the optical waveguide, which allows the optical waveguide to move in the direction of the housing (1) and prevents it from moving in the opposite direction, characterized in that the cable guide branches over at least one separating element for separating (10) to guides (11) for the optical waveguide conductors, whereby the guides (11) lead to the respective connecting means (5), whereby each guide (11) is allocated at least one separation plane of the separation element (10), in such a way that during advance of the optical waveguide cable, tearing forces act on the ridges between the optical waveguide conductors, and the optical waveguide cable is split into individual conductors or groups of conductors which are guided into the guides (11).

2. A coupling device according to claim 1, characterized in that each separating element (10), at the side facing the optical waveguide, comprises at least one raised cutting edge, parallel to the optical waveguide.

3. A coupling device according to claim 2, characterized in that each separating element (10) comprises at least one pyramid-shaped wedge tapering off towards the insertion aperture (4).

4. A coupling device according to one of claims 1 to 3, characterized in that the clamping element is a leaf spring (6) which, at the side facing the optical waveguide, is provided with ribs (7) inclined in the direction of insertion.

5. A coupling device according to one of claims 1 to 4, characterized in that the clamping element is shaped in such a way that it completely shields the cable guide if no optical waveguide is inserted in the coupling device.

6. A coupling device according to claims 1 to 5, characterized in that the clamping element embodies manually-operated means for undoing the clamping element, against the clamping force.

7. A coupling device according to one of claims 1 to 6, characterized in that the connecting means (5) comprise resiliently mounted engaging protrusions (12) and/or adjusting protrusions (15).

8. A coupling device according to one of claims 1 to 7, characterized in that elastic elements are provided which apply such force to the elements to be coupled that, when they are coupled, they move towards each other.

9. A coupling device according to one of claims 1 to 8, characterized in that the clamping element is shaped in such a way that it shields the cable guide from the intrusion of electromagnetic radiation, if no optical waveguide is inserted into the coupling device.

10. A coupling device according to one of claims 1 to 9, characterized in that the coupling device consists entirely of electrically conductive material.

11. A coupling device according to one of the above claims, characterized in that the length of the cable guide and its inside width are matched in such a way that intrusion of electromagnetic radiation into the connecting means (5) is avoided.

## Revendications

1. Dispositif de couplage pour câble de guide d'ondes lumineuses avec plusieurs fils de guide d'ondes lumineuses reliés respectivement par des moulures, comportant un boîtier (1), qui présente, sur un côté, une ouverture d'insertion (4) pour un guide d'ondes lumineuses et, sur un autre côté, des moyens de connexion (5), l'ouverture d'insertion (4) étant reliée aux moyens de connexion (5) par un guide-câble à l'intérieur du boîtier (1) et le guide-câble présentant, dans une zone côté ouverture d'insertion, un élément de blocage monté de manière élastique pour maintenir le guide d'ondes lumineuses, qui libère le déplacement du guide d'ondes lumineuses dans la direction du boîtier (1) et le bloque dans la direction opposée, caractérisé en ce que le guide-câble est ramifié, via au moins un élément de séparation (10), en guides (11) pour les fils du guide d'ondes lumineuses, les guides (11) menant aux moyens de connexion respectifs (5), à chaque guide (11) étant affectée au moins une surface de séparation de l'élément de séparation (10) de sorte que, lors de l'avancement du câble du guide d'ondes lumineuses, des forces de rupture s'exercent entre les moulures formées entre les fils du guide d'ondes lumineuses et que le câble du guide d'ondes lumineuses soit séparé en fils ou groupes de fils individuels qui sont acheminés dans les guides (11).

2. Dispositif de couplage selon la revendication 1, dans lequel chaque élément de séparation (10) présente, sur son côté tourné vers le guide d'ondes lumineuses, au moins une arête de coupe en relief s'étendant dans la direction longitudinale du guide d'ondes lumineuses.

3. Dispositif de couplage selon la revendication 2, dans lequel chaque élément de séparation (10) est constitué d'au moins une cale se réduisant en forme de pyramide dans la direction de l'ouverture d'insertion (4).

4. Dispositif de couplage selon l'une quelconque des revendications 1 à 3, dans lequel l'élément de blocage présente un ressort à lame (6) et, sur son côté tourné vers le guide d'ondes lumineuses, des nervures (7) inclinées dans la direction d'insertion.

5. Dispositif de couplage selon l'une quelconque des revendications 1 à 4, dans lequel l'élément de blocage est dimensionné de sorte qu'il occulte complètement le guide-câble lorsqu'aucun guide d'ondes lumineuses n'est inséré dans le dispositif de couplage.

6. Dispositif de couplage selon les revendications 1 à 5, dans lequel l'élément de blocage présente des moyens commandables à la main pour desserrer l'élément de blocage à l'encontre de la force de blocage.

7. Dispositif de couplage selon l'une quelconque des revendications 1 à 6, dans lequel les moyens de connexion (5) présentent des boutons d'encliquetage (12) et/ou des boutons d'ajustement (15) montés sur ressort.

8. Dispositif de couplage selon l'une quelconque des revendications 1 à 7, dans lequel sont prévus des éléments élastiques qui exercent sur les éléments à coupler l'un à l'autre, à l'état couplé, une force de compression telle que ces éléments peuvent être déplacés l'un vis-à-vis de l'autre.

9. Dispositif de couplage selon l'une quelconque des revendications 1 à 8, dans lequel l'élément de blocage est dimensionné de telle sorte qu'il protège le guide-câble contre la pénétration de rayons électromagnétiques lorsqu'aucun guide d'ondes lumineuses n'est inséré dans le dispositif de couplage.

10. Dispositif de couplage selon l'une quelconque des revendications 1 à 9, dans lequel le dispositif de couplage est constitué intégralement d'un matériau conducteur de l'électricité.

11. Dispositif de couplage selon l'une quelconque des revendications précédentes, dans lequel la longueur du guide-câble et son diamètre interne sont ajustés l'un à l'autre de telle sorte que soit empêchée une pénétration de rayons électromagnétiques dans les moyens de connexion (5).
